# FASCICULE DE BREVET EUROPEEN

(11) **EP 0 430 730 B1**
(45) Date de publication et mention de la délivrance du brevet: **22.12.1993**
(21) Numéro de dépôt: 90403067.3
(22) Date de dépôt: 30.10.1990
(51) Int. Cl.: B60T 13/567

(54) **Servomoteur pneumatique d'assistance au freinage**
Pneumatischer Hilfskraft-Bremsverstärker
Pneumatic servo-unit for brakes

(30) Priorité: 30.11.1989 FR 8915774
(43) Date de publication de la demande: 05.06.1991
(73) Titulaire: ALLIEDSIGNAL EUROPE SERVICES TECHNIQUES, 93700 Drancy (FR)
(72) Inventeur: Gautier, Jean-Pierre, Bendix Europe Services Techn, F-93700 Drancy (FR); Verbo, Ulysse, Bendix Europe Services Techniques, F-93700 Drancy (FR); Perez, Miguel, Bendix Europe Services Techniques, F-93700 Drancy (FR)
(74) Mandataire: Bentz, Jean-Paul

(56) Documents cités:
- EP-A- 0 260 170
- EP-A- 0 262 006
- GB-A- 2 087 016

## Description

La présente invention concerne les servomoteurs pneumatiques d'assistance au freinage et plus particulièrement leur fixation sur une partie fixe d'un véhicule ou la fixation sur eux d'un maître-cylindre.

Les servomoteurs pneumatiques sont bien connus dans la technique du freinage et comportent typiquement un boîtier sur lequel est formée une cheminée abritant des moyens de valve d'actionnement, une première paroi comportant au moins une ouverture coopérant avec des moyens de fixation du boîtier sur une partie fixe d'un véhicule, une seconde paroi comportant au moins une ouverture coopérant avec des moyens de fixation d'un maître-cylindre sur le boîtier, au moins une pièce annulaire étant disposée dans le boîtier contre une paroi.

De façon classique, les moyens de fixation sont constitués par des vis de montage à tête large, cette tête étant disposée à l'intérieur du boîtier, la partie filetée de la vis dépassant à l'extérieur du boîtier pour recevoir un écrou solidarisant le boîtier avec une paroi fixe du véhicule ou avec le maître-cylindre.

De nombreux problèmes sont posés pour le maintien de la tête de vis dans le boîtier avant son installation, et ont été résolus par l'adjonction à l'intérieur du boîtier de pièces supplémentaires, par le sertissage de la vis sur les parois du boîtier, etc...

D'autres problèmes se posent pour empêcher la vis, une fois en place, de tourner quand on visse l'écrou, et ont été résolus en donnant une forme anti-rotation aux têtes de vis comme décrit dans GB-A-2 087 016.

Toutes ces solutions conduisent à des réalisations onéreuses et complexes, qui ont en plus l'inconvénient d'alourdir le servomoteur.

La présente invention a donc pour but un servomoteur du type rappelé ci-dessus, dans lequel les moyens de fixation sont simples à réaliser, donc peu onéreux, et contribuent à alléger le servomoteur.

L'invention a aussi pour but un servomoteur ne comportant pas de vis additionnelle de fixation.

Dans ce but, la présente invention prévoit que les moyens de fixation sont constitués par au moins une partie en saillie de la pièce annulaire.

D'autres caractéristiques et avantages de la présente invention ressortiront de la description suivante de deux modes de réalisation donnés à titre d'exemple non limitatif en relation avec les dessins annexés sur lesquels:
- la Figure 1 est une vue en coupe partielle d'un servomoteur équipé de moyens de fixation selon un premier mode de réalisation,
- la Figure 2, est une vue en coupe partielle d'un servomoteur équipé de moyens de fixation selon un second mode de réalisation.

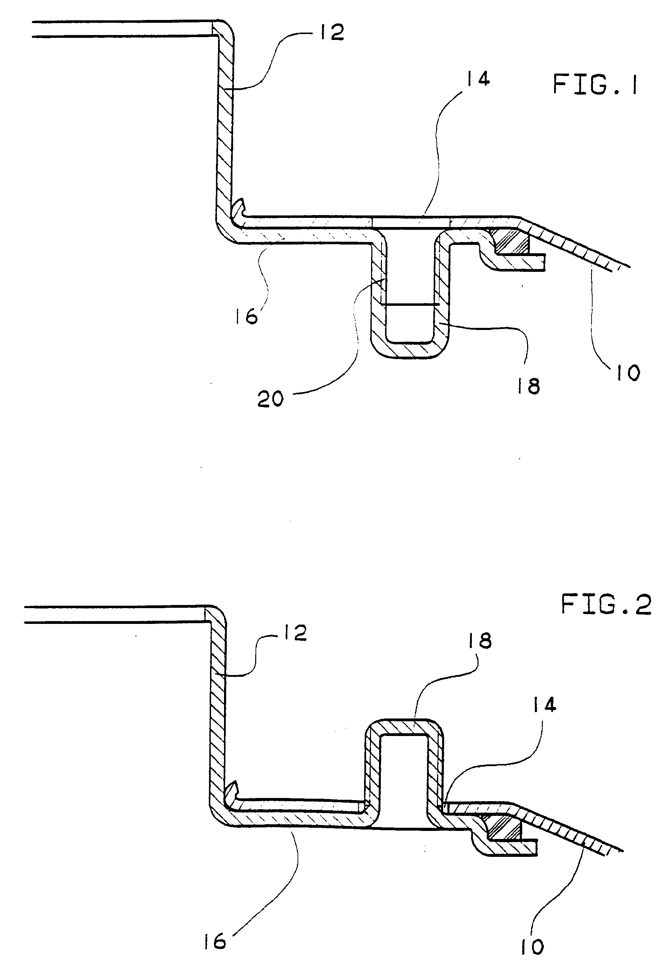

On a représenté sur la Figure 1 une partie de la paroi arrière 10 d'un servomoteur pneumatique à laquelle est associée une cheminée 12 destinée à abriter des moyens de valve (non représentés) régissant le fonctionnement du servomoteur.

De façon connue, la paroi arrière 10 comporte au moins une ouverture 14 où, dans les techniques de l'art antérieur, on introduisait par le bas en considérant la Figure une vis à tête large, de façon que la partie filetée de la vis dépasse à l'extérieur du sevomoteur, avec les problèmes rappelés plus haut de maintien de cette vis en position et en rotation.

Conformément à l'invention, ces problèmes sont résolus en prévoyant une pièce annulaire 16 contre la paroi 10. Cette pièce annulaire est formée avec au moins une partie en saillie 18, dirigée vers l'intérieur du servomoteur et située en face de l'ouverture 14. La partie en saillie 18 est de préférence cylindrique, et comporte un filetage intérieur 20 de façon à pouvoir recevoir la partie filetée d'une vis pour la fixation du boîtier de servomoteur sur une paroi fixe (non représentée) d'un véhicule ou sur un maître-cylindre (non représenté).

On a représenté sur la Figure 2 un autre mode de réalisation, dans lequel la partie en saillie 18 est dirigée vers l'extérieur du boîtier du servomoteur et traverse l'ouverture 14. Ici encore la partie en saillie 18 est cylindrique, mais elle comporte un filetage extérieur 20 pour recevoir un écrou pour le montage du servomoteur sur une paroi fixe du véhicule, ou pour le montage d'un maître-cylindre sur le servomoteur.

La cheminée 12 a été représentée d'une seule pièce avec la pièce annulaire 16, mais il est bien évident qu'elle peut être formée d'une seule pièce avec la paroi arrière 10. D'autre part, la pièce annulaire 16 a été représentée d'une épaisseur sensiblement égale à celle de la paroi 10, mais il est également évident qu'elle pourrait être plus épaisse et ainsi constituer un renfort.

## Revendications

1. Servomoteur pneumatique d'assistance au freinage, comportant un boîtier sur lequel est formée une cheminée (12) abritant des moyens de valve d'actionnement, une première paroi (10) comportant au moins une ouverture (14) coopérant avec des moyens de fixation du boîtier sur une partie fixe d'un véhicule, une seconde paroi comportant au moins une ouverture coopérant avec des moyens de fixation d'un maître-cylindre sur le boîtier, au moins une pièce annulaire (16) étant disposée dans le boîtier contre une paroi et comportant au moins une partie en saillie (18), caractérisé en ce que la partie en saillie (18) de la pièce annulaire (16) traverse l'ouverture (14) de la paroi du boîtier et est filetée extérieurement pour constituer les moyens de fixation.

2. Servomoteur pneumatique d'assistance au freinage, comportant un boîtier sur lequel est formée une cheminée (12) abritant des moyens de valve d'actionnement, une première paroi (10) comportant au moins une ouverture (14) coopérant avec des moyens de fixation du boîtier sur une partie fixe d'un véhicule, une seconde paroi comportant au moins une ouverture coopérant avec des moyens de fixation d'un maître-cylindre sur le boîtier, au moins une pièce annulaire (16) étant disposée dans le boîtier contre une paroi et comportant au moins une partie en saillie (18), caractérisé en ce que la partie en saillie (18) de la pièce annulaire (16) est située en face de l'ouverture (14) de la paroi du boîtier et est dirigée vers l'intérieur du boîtier, et en ce qu'elle est taraudée pour constituer les moyens de fixation.

3. Servomoteur selon la revendication 1 ou 2, caractérisé en ce que la pièce annulaire (16) constitue un renfort annulaire.

4. Servomoteur selon la revendication 1 ou 2, caractérisé en ce que la pièce annulaire (16) est formée d'une seule pièce avec la cheminée (12).

## Patentansprüche

1. Pneumatischer Bremskraftverstärker mit einem Gehäuse, in dem ein Kanal (12) ausgebildet ist, der Betätigungsventilmittel aufnimmt, einer ersten Wand (10), die wenigstens eine Öffnung (14) enthält, die mit Gehäusebefestigungsmitteln auf einem feststehenden Abschnitt eines Fahrzeugs zusammenwirkt, einer zweiten Wand, die wenigstens eine Öffnung enthält, die mit Hauptzylinderbefestigungsmitteln auf dem Gehäuse zusammenwirkt, wenigstens einem Ringelement (16), das im Gehäuse an einer Wand angeordnet ist und wenigstens einen hervorstehenden Abschnitt (18) aufweist, dadurch gekennzeichnet, daß der hervorstehende Abschnitt (18) des Ringelements (16) die Öffnung (14) in der Wand des Gehäuses durchquert und mit einem Außengewinde versehen ist, um die Befestigungsmittel zu bilden.

2. Pneumatischer Bremskraftverstärker mit einem Gehäuse, in dem ein Kanal (12) ausgebildet ist, der Betätigungsventilmittel aufnimmt, einer ersten Wand (10), die wenigstens eine Öffnung (14) enthält, die mit Gehäusebefestigungsmitteln auf einem feststehenden Abschnitt eines Fahrzeugs zusammenwirkt, einer zweiten Wand, die wenigstens eine Öffnung enthält, die mit Hauptzylinderbefestigungsmitteln auf dem Gehäuse zusammenwirkt, wenigstens einem Ringelement (16), das im Gehäuse an einer Wand angeordnet ist und wenigstens einen hervorstehenden Abschnitt (18) aufweist, dadurch gekennzeichnet, daß der hervorstehende Abschnitt (18) des Ringelements (16) gegenüber der Öffnung (14) der Wand des Gehäuses angeordnet und in Richtung des Gehäuseinneren gerichtet ist, und daß er mit einem Innengewinde versehen ist, um die Befestigungsmittel zu bilden.

3. Bremskraftverstärker nach Anspruch 1 oder 2, dadurch gekennzeichnet, daß das Ringelement (16) eine ringförmige Verstärkung bildet.

4. Bremskraftverstärker nach Anspruch 1 oder 2, dadurch gekennzeichnet, daß das Ringelement (16) einteilig mit dem Kanal (12) ausgebildet ist.

## Claims

1. Pneumatic brake-booster comprising a casing on which is formed a well (12) housing operating valve means, a first wall (10) having at least one opening (14) cooperating with means for fastening the casing on a fixed part of a vehicle, a second wall having at least one opening cooperating with means for fastening a master cylinder on the casing, at least one annular member (16) being disposed in the casing, against a wall, and comprising at least one projecting portion (18), characterized in that the projecting portion (18) of the annular member (16) passes through the opening (14) of the casing wall and has an external screwthread to constitute the fastening means.

2. Pneumatic brake-booster comprising a casing on which is formed a well (12) housing operating valve means, a first wall (10) having at least one opening (14) cooperating with means for fastening the casing on a fixed part of a vehicle, a second wall having at least one opening cooperating with means for fastening a master cylinder on the casing, at least one annular member (16) being disposed in the casing, against a wall, and comprising at least one projecting portion (18), characterized in that the projecting portion (18) of the annular member (16) is situated facing the opening (14) in the casing wall and is directed towards the interior of the casing, and in that it has an internal screwthread to constitute the fastening means.

3. Booster according to Claim 1 or 2, characterized in that the annular member (16) constitutes an annular reinforcement.

4. Booster according to Claim 1 or 2, characterized in that the annular member (16) is made in one piece with the well (12).
